(19) **Europäisches Patentamt / European Patent Office / Office européen des brevets**

(11) **EP 3 318 468 B1**

(12) **EUROPEAN PATENT SPECIFICATION**

(45) Date of publication and mention
of the grant of the patent:
**18.03.2020 Bulletin 2020/12**

(21) Application number: **16857481.2**

(22) Date of filing: **19.10.2016**

(51) Int Cl.:
*B62D 6/00* (2006.01)      *B62D 5/04* (2006.01)
*G01B 21/22* (2006.01)      *B62D 101/00* (2006.01)
*B62D 103/00* (2006.01)      *B62D 105/00* (2006.01)
*B62D 113/00* (2006.01)      *B62D 117/00* (2006.01)
*B62D 119/00* (2006.01)      *B62D 137/00* (2006.01)

(86) International application number:
**PCT/JP2016/081004**

(87) International publication number:
**WO 2017/069168 (27.04.2017 Gazette 2017/17)**

(54) **ELECTRIC POWER STEERING DEVICE**

ELEKTRISCHE SERVOLENKVORRICHTUNG

DIRECTION À ASSISTANCE ÉLECTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.10.2015 JP 2015209294**

(43) Date of publication of application:
**09.05.2018 Bulletin 2018/19**

(73) Proprietor: **NSK Ltd.**
**Tokyo 141-8560 (JP)**

(72) Inventor: **KOJIMA, Atsushi**
**Maebashi-Shi**
**Gunma 371-8527 (JP)**

(74) Representative: **Luten, Martin Haaije et al**
**Arnold & Siedsma**
**Bezuidenhoutseweg 57**
**2594 AC The Hague (NL)**

(56) References cited:
**EP-A1- 2 492 168       WO-A1-2011/048702
JP-A- H09 311 036       JP-A- 2006 204 073
JP-A- 2008 151 762       JP-A- 2010 179 848
JP-A- 2013 147 174       JP-A- 2013 147 174**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates, in an electric power steering apparatus has a control function to input a steering angle without having a steering angle sensor, to the electric power steering apparatus that prevents from an incorrect output of a control which uses a estimated steering angle by estimating a steering angle from a four-wheel speed signals, calculating the estimated steering angle in response to a running state of a vehicle, judging a certainty of the estimated steering angle from a four-wheel speeds and correcting a control output which uses the estimated steering angle or the estimated steering angle.

The present invention also relates to the electric power steering apparatus that has a handle-returning (active return) control function which uses the steering angle estimated from the wheel-speeds.

Background Art

An electric power steering apparatus (EPS) which provides a steering system of a vehicle with a steering assist torque (an assist torque) by means of a rotational torque of a motor, applies the steering assist torque to a steering shaft or a rack shaft by means of a transmission mechanism such as gears or a belt through a reduction mechanism. In order to accurately generate the assist torque, such a conventional electric power steering apparatus performs a feedback control of a motor current. The feedback control adjusts a voltage supplied to the motor so that a difference between a current command value and a detected motor current value becomes small, and the adjustment of the voltage applied to the motor is generally performed by an adjustment of a duty of a pulse width modulation (PWM) control.

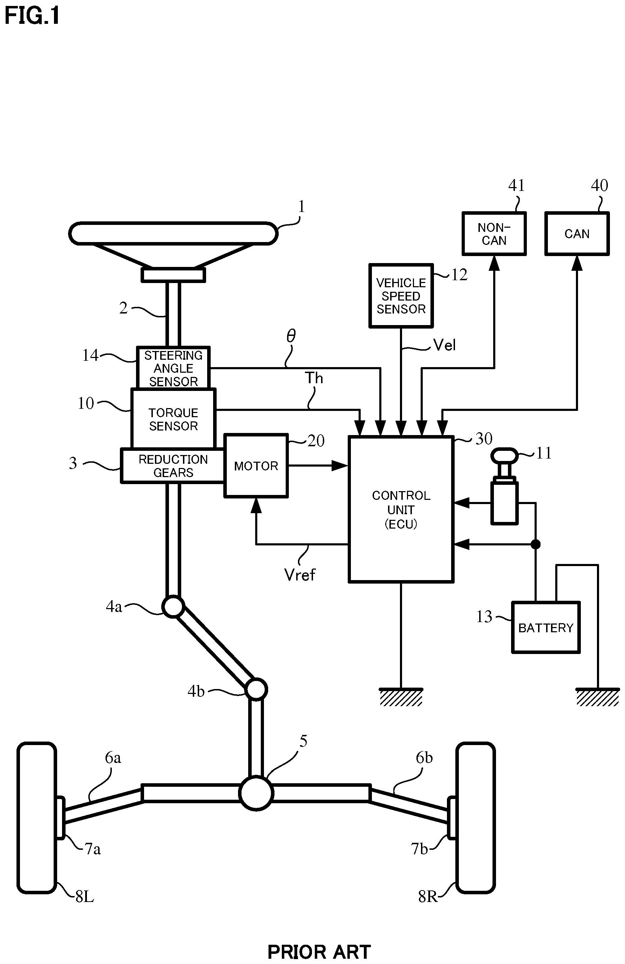

A general configuration of the conventional electric power steering apparatus will be described with reference to FIG.1. As shown in FIG.1, a column shaft (a steering shaft or a handle shaft) 2 connected to a steering wheel 1 is connected to steered wheels 8L and 8R through reduction gears 3, universal joints 4a and 4b, a rack-and-pinion mechanism 5, and tie rods 6a and 6b, further via hub units 7a and 7b. In addition, the torsion bar is interposed within the column shaft 2, the column shaft 2 is provided with a steering angle sensor 14 for detecting a steering angle θ of the handle 1 by means of a torsional angle of the torsion bar and a torque sensor 10 for detecting a steering torque Th of the steering wheel 1, and a motor 20 for assisting a steering force of the steering wheel 1 is connected to the column shaft 2 through the reduction gears 3. The electric power is supplied to a control unit (ECU) 30 for controlling the electric power steering apparatus from a battery 13, and an ignition key signal is inputted into the control unit 30 through an ignition key 11. The control unit 30 calculates a current command value of an assist (a assist) command on the basis of the steering torque Th detected by the torque sensor 10 and a vehicle speed Vel detected by a vehicle speed sensor 12, and controls a current supplied to the motor 20 by means of a voltage control value Vref obtained by performing compensation or the like to the current command value. It is possible to receive the vehicle speed Vel from a area network (CAN) or the like.

A steering angle sensor 14 is not indispensable and may not be provided. It is possible to obtain the steering angle from a rotational position sensor which is connected to the motor 20.

The controller area network (CAN) 40 to send/receive various information and signals on the vehicle is connected to the control unit 30, and it is also possible to receive the vehicle speed Vel from the CAN. Further, a Non-CAN 41 is also possible to connect to the control unit 30, and the Non-CAN 41 sends and receives a communication, analogue/digital signals, electric wave or the like except for the CAN 40.

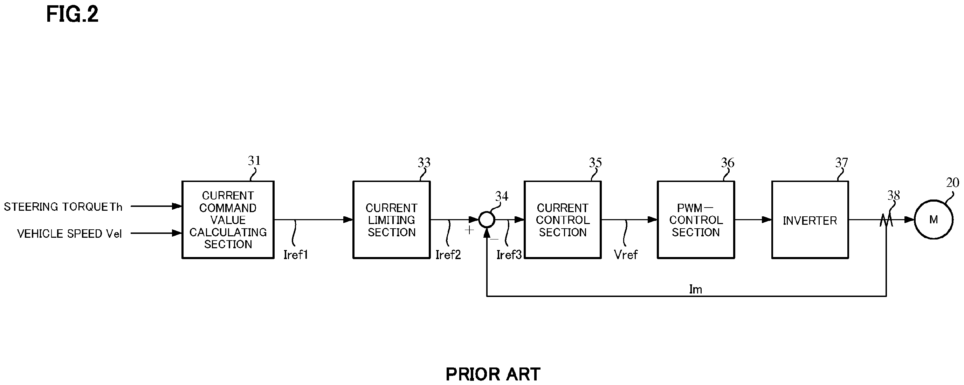

The control unit 30 mainly comprises a central processing unit (CPU) (including a micro processing unit (MPU) and a micro controller unit (MCU)), and general functions performed by programs within the CPU are, for example, shown in FIG.2.

Functions and operations of the control unit 30 will be described with reference to FIG.2. The steering torque Th detected by the torque sensor 10 and the vehicle speed Vel detected by the vehicle speed sensor 12 (or from the CAN 40) are inputted into a current command value calculating section 31. The current command value calculating section 31 calculates a current command value Iref1, which the vehicle speed Vel is served as a parameter, by using an assist map. The calculated current command value Iref1 is limited an upper limiting value thereof at a current limiting section 33. The current command value Iref2 which is limited the upper limiting value is inputted into a subtracting section 34. The subtracting section 34 calculates a deviation Iref3 (=Iref2-Im) between the current command value Iref2 and the fed-back motor current Im. The deviation Iref3 is performed proportional-integral-control (PI-control) and so on at a current control section 35. The voltage control value Vref is inputted into a PWM-control section 36, whereat a duty thereof is calculated. The motor 20 is PWM-driven by an inverter 37. The motor current value Im of the motor 20 is detected by a motor current detector 38 and is inputted into the subtracting section 34 for the feedback.

Comparing with a conventional hydraulic power steering apparatus, since such an electric power steering apparatus is equipped with the motor and the gears, there is a problem that the handle-returning is not adequate after a turning-left or a turning-right at a road intersection or the like due to large friction. In order to improve the handle-returning at the road intersection, as described in Japanese Patent No.3551147 B2 (Patent Document 1), the handle-returning control based on the steering angle by using the steering angle sensor, is widespread. That is, FIG.3 shows a schematic configuration of the apparatus according to the Patent Document 1. A handle-returning control section 32 which calculates a handle-returning current HR based on the steering angle $\theta$, a steering angular velocity $\omega$ and the vehicle speed Vel, is provided with the apparatus. The calculated handle-returning current HR is added to the current command value Iref1 at an adding section 32A, and a current command value Iref4 that is corrected by the handle-returning current HR is inputted into the current limiting section 33. However, in the apparatus of Patent Document 1, since the steering angle sensor is provided and causes an increase of a cost, it is desired to the handle-returning control without having the steering angle sensor.

In this connection, it is proposed that the electric power steering apparatus controls the handle-returning by using not the steering angle sensor but the wheel speed (Japanese Patent No.3525541 B2 (Patent Document 2)). However, because the handle-returning control is performed based on the steering angle estimated from left and right wheel-speed signals in the electric power steering apparatus according to the Patent Document 2, in a case that a vehicle slip occurs on a snowy road or the like, there is a problem that the apparatus misestimates the steering angle and the handle turns in a direction to which a driver does not intend.

Further, it is known that the electric power steering apparatus which compares the steering angle estimated from rear-wheel left and right wheel speed signals with the steering angle sensor value, and decreases the control output of the control by using the estimated angle in a case that the difference is abnormal for a threshold (preventing from an incorrect output) (Japanese Patent No.4671435 B2). Document JP2013-147174 A, which is seen as the closest prior art discloses an apparatus according to the preamble of claim 1.

The List of Prior Art Documents

Patent Documents

Patent Document 1: Japanese Patent No.3551147 B2
Patent Document 2: Japanese Patent No.3525541 B2
Patent Document 3: Japanese Patent No.4671435 B2

Summary of the Invention

Problems to be Solved by the Invention

However, since it is necessary to be provided with the steering angle sensor in the apparatus according to Patent Document 3, there is a problem to cause a cost increase.

The present invention has been developed in view of the above-described circumstances, and an object of the present invention is to provide the high performance electric power steering apparatus that does not need to have the steering sensor and prevents from an incorrect output by calculating a front-wheel estimated steering angle from the front-wheel left and right wheel speeds, calculating a rear-wheel estimated steering angle from the rear-wheel left and right wheel speeds, calculating the four-wheel estimated steering angle by using the front-wheel estimated angle, the rear-wheel estimated angle and the vehicle speed, or by using the front-wheel estimated angle, the rear-wheel estimated angle, the vehicle speed and a running condition (an acceleration and deceleration running, a rough road running or the like), and correcting the certainty of the four-wheel estimated steering angle by using the front-wheel estimated angle, the rear-wheel estimated angle and the four-wheel speeds, or correcting the output of the control by using the four-wheel estimated steering angle.

Means for Solving the Problems

The present invention relates to an electric power steering apparatus that comprises a torque sensor to detect a steering torque which is inputted into a steering mechanism of a vehicle, a current command value calculating section to calculate a current command value based on at least the steering torque, a motor to generate a steering assist torque applied to the steering mechanism, and a motor control section to driving-control the motor based on the current command value, the above-described object of the present invention is achieved by that comprising: a steering angle estimating calculating section to vary a front-wheel weight X of a front-wheel estimated steering angle and a rear-wheel weight Y of a rear-wheel estimated steering angle corresponding to a running state of the vehicle and calculate a four-wheel estimated steering angle based on the front-wheel weight X and the rear-wheel weight Y (X+Y=1.0).

The above-described object of the present invention is efficiently achieved by that: wherein in a case that the running state of the vehicle is an acceleration running or a deceleration running, the electric power steering apparatus further comprises an acceleration and deceleration calculating section to calculate an acceleration and deceleration estimated value from a vehicle speed, and an acceleration and deceleration sensitive-table to calculate the front-wheel weight X and the rear-wheel weight Y based on the acceleration and deceleration estimated value; or wherein the acceleration and deceleration calculating section comprises a differential section to differentiate the vehicle speed, or a memory unit to store a previous value of the vehicle speed and a subtracting section to subtract the previous value from a present value; or wherein the acceleration and deceleration sensitive-table sets the front-wheel weight X equivalent to the rear-wheel weight Y near a zero value of the acceleration and deceleration estimated value, and makes the front-wheel weight X larger in an acceleration running and a deceleration running; or wherein in a case that the running state of the vehicle is a rough road running, the electric power steering apparatus further comprises a road surface estimated value calculating section to calculate a road surface estimated value from a four-wheel speeds of the vehicle, and a road surface estimated value sensitive-table to calculate the front-wheel weight X and the rear-wheel weight Y based on the road surface estimated value; or wherein the road surface estimating calculating section calculates a variation of a vehicle speed in each of wheels from the four-wheel speeds, and calculates the road surface estimated value by judging the rough road running from a maximum acceleration or a deceleration ; or wherein the road surface estimated value sensitive-table sets the front-wheel weight X equivalent to the rear-wheel weight Y near a zero value of the road surface estimated value, and makes the rear-wheel weight Y larger when the road surface estimated value is a predetermined value or more; or wherein in a case that the running state of the vehicle is a slalom steering driving, the electric power steering apparatus further comprises a steering angular velocity sensitive-table to calculate the front-wheel weight X and the rear-wheel weight Y from a motor angular velocity estimated value; or wherein the steering angular velocity sensitive-table sets the front-wheel weight X equivalent to the rear-wheel weight Y in an area that the motor angular velocity estimated value is small, and makes the front-wheel weight X larger when the motor angular velocity estimated value is a predetermined value or more; or wherein in a case that the running state of the vehicle is an acceleration running, a deceleration running, a rough road running, a slalom steering driving, an average value of a four-wheel estimated steering angle $\theta$est1 which is calculated in the acceleration running and the deceleration running, a four-wheel estimated steering angle $\theta$est2 which is calculated in the rough road running, and a four-wheel estimated steering angle $\theta$est3 which is calculated in the slalom steering driving, is set as the four-wheel estimated steering angle; or wherein the four-wheel estimated steering angles $\theta$est1, $\theta$est2 and $\theta$est3 are weighted with Xt, Yt and Zt (Xt+Yt+Zt=1.0), respectively.


Effects of the Invention

The electric power steering apparatus according to the present invention calculates the front-wheel estimated steering angle from the front-wheel left and right wheel speeds, calculates the rear-wheel estimated steering angle from the rear-wheel left and right wheel speeds, calculates the four-wheel estimated steering angle by using the front-wheel estimated angle, the rear-wheel estimated angle and the running state of the vehicle, and corrects the certainty of the four-wheel estimated steering angle by using the front-wheel estimated angle, the rear-wheel estimated angle and the four-wheel speeds, or corrects the output of the control by using the four-wheel estimated steering angle.

Thereby, the present invention can provide the high reliable and low-cost electric power steering apparatus that does not need to have the steering angle sensor and prevents from the incorrect output. Especially, since the four-wheel estimated steering angle is calculated by using the running state of the vehicle, the optimal four-wheel estimated steering angle is obtained in each of the running states.


Brief Description of the Drawings

In the accompanying drawings:

FIG.1 is a configuration diagram showing a general outline of an electric power steering apparatus;
FIG.2 is a block diagram showing a general configuration example of a control system of the electric power steering apparatus;
FIG.3 is a block diagram showing a configuration example of a control system of the electric power steering apparatus having a conventional handle-returning control function;
FIG.4 is a block diagram showing a configuration example of the present invention;
FIG.5 is a block diagram showing a configuration example of a steering angle estimating section;
FIG.6A, FIG.6B and FIG.6C are diagrams for explaining an estimation of a four-wheel estimated steering angle;
FIG.7 is a schematic diagram for explaining a steering angle estimation;

FIG.8 is a block diagram showing a configuration example (Example 1-1) of a weighting section in a steering angle estimating calculating section;

FIG.9 is a block diagram showing a configuration example of a correction gain calculating section;

FIG.10A and FIG.10B are schematic diagrams for explaining an operation of a vehicle slip judging section;

FIG.11 is a block diagram showing a configuration example of the vehicle slip judging section;

FIG.12 is a characteristic diagram showing an operation example of a vehicle slip judging;

FIG.13A and FIG.13B are schematic diagrams for explaining an operation of a driving-wheel slip judging section;

FIG.14 is a block diagram showing a configuration example of the driving-wheel slip judging section;

FIG.15 is a block diagram showing a configuration example of a handle-returning control section;

FIG.16 is a characteristic diagram showing one example of a steering angle sensitive-table;

FIG.17 is a characteristic diagram showing one example of a vehicle speed sensitive-table;

FIG.18 is a characteristic diagram showing one example of a steering angular velocity sensitive-table;

FIG.19 is a flowchart showing an operation example of the present invention;

FIG.20 is a flowchart showing an operation example of the steering angle estimating calculating section;

FIG.21 is a flowchart showing an operation example of the correction gain calculating section;

FIG.22 is a flowchart showing an operation example of the handle-returning control section;

FIG.23 is a diagram showing merits and demerits in view of a variety of evaluation viewpoints, such as a responsibility, for a steering angle estimating method in various running states of an actual running vehicle;

FIG.24 is a block diagram showing a configuration example (Example 2-1) of the steering angle estimating section in acceleration and deceleration running;

FIG.25 is a block diagram showing a configuration example of an acceleration and deceleration calculating section;

FIG.26 is a characteristic diagram showing one example of an acceleration and deceleration sensitive-table;

FIG.27 is a block diagram showing a configuration example (Example 2-2) of the steering angle estimating section in a rough road running;

FIG.28 is a block diagram showing a configuration example of a road surface estimating section;

FIG.29 is a characteristic diagram showing one example of a road surface estimated value sensitive-table;

FIG.30 is a block diagram showing a configuration example (Example 2-3) of the steering angle estimating section in a slalom steering running;

FIG.31 is a characteristic diagram showing one example of a motor angular velocity sensitive-table;

FIG.32 is a block diagram showing a configuration example (Example 2-5) of the steering angle estimating section which can be applied to all of running states; and

FIG.33 is a block diagram showing a modification example (Example 2-6) of the configuration shown in FIG.32.

Mode for Carrying Out the Invention

An electric power steering apparatus of the present invention does not need to have a steering angle sensor and prevents from an incorrect output by calculating a front-wheel estimated steering angle from a front-wheel left and right wheel speeds, calculating a rear-wheel estimated steering angle from a rear-wheel left and right wheel speeds, calculating a four-wheel estimated steering angle by varying weights of the front-wheel estimated angle and the rear-wheel estimated angle in response to a running state such as acceleration and deceleration running, and correcting a certainty of a four-wheel estimated steering angle by using the front-wheel estimated angle, the rear-wheel estimated angle and the four-wheel speeds, a vehicle speed and a motor angular velocity estimated value, or correcting an output of the control by using the four-wheel estimated steering angle.

Further, in the present invention, a configuration having the above functions is applied to a handle-returning (active return) control.

Embodiments according to the present invention will be described with reference to the drawings in detail. In the present embodiment, it is described in an example that is applied the present invention to the handle-returning control.

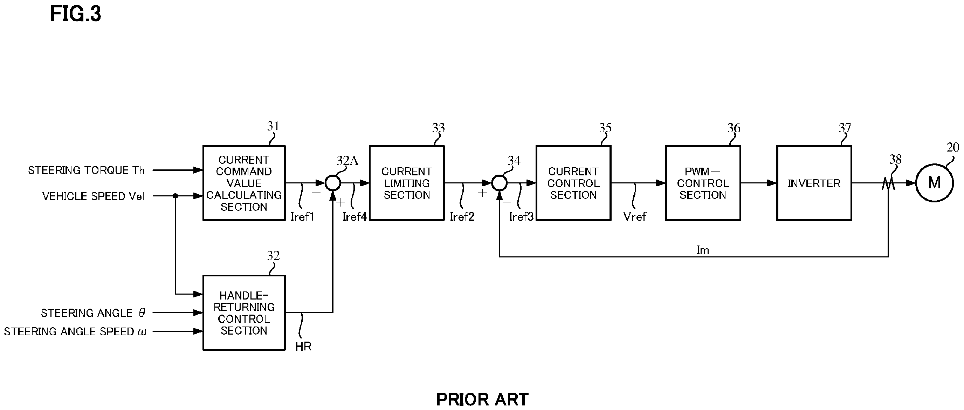

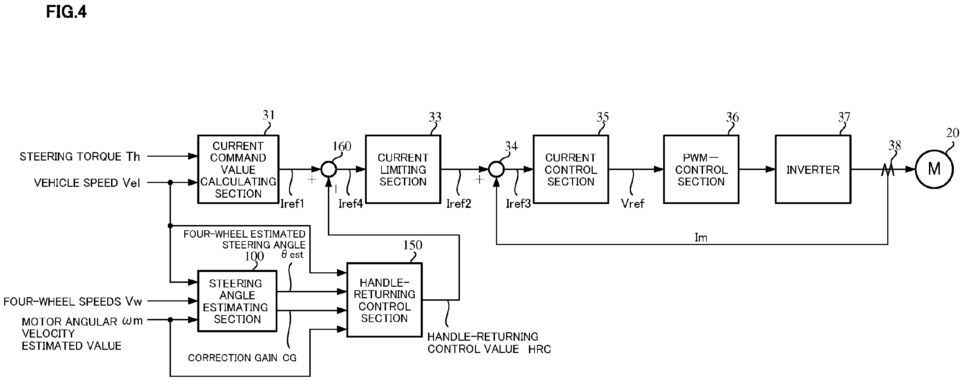

FIG.4 shows a configuration example of the present invention corresponding to FIG.3, there are newly provided a steering angle estimating section 100 which inputs the vehicle speed Vel, four-wheel speeds (front-wheel left and right wheel speeds, rear-wheel left and right wheel speeds) Vw and a motor angular velocity estimated value ωm, and calculates a four-wheel estimated steering angle θest and a correction gain CG; a handle-returning control section 150 which inputs the vehicle speed Vel, the motor angular velocity estimated value ωm, the four-wheel estimated steering angle θest and the correction gain CG, and calculates and outputs a handle-returning control value HRC; and an adding section 160 which adds the handle-returning control value HRC to a current command value Iref1, and corrects the current command value Iref1.

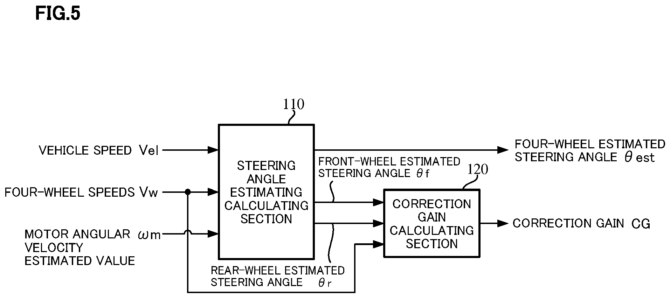

As shown in FIG.5, the steering angle estimating section 100 comprises a steering angle estimating calculating section 110 which inputs the vehicle speed Vel, the four-wheel speeds Vw and the motor angular velocity estimated value ωm, and calculates and outputs the four-wheel estimated steering angle θest, a front-wheel estimated steering angle θf and a rear-wheel estimated steering angle θr, and a correction gain calculating section 120 which inputs the four-wheel speeds Vw, the front-wheel estimated steering angle θf and the rear-wheel estimated steering angle θr, and calculates the correction gain CG.

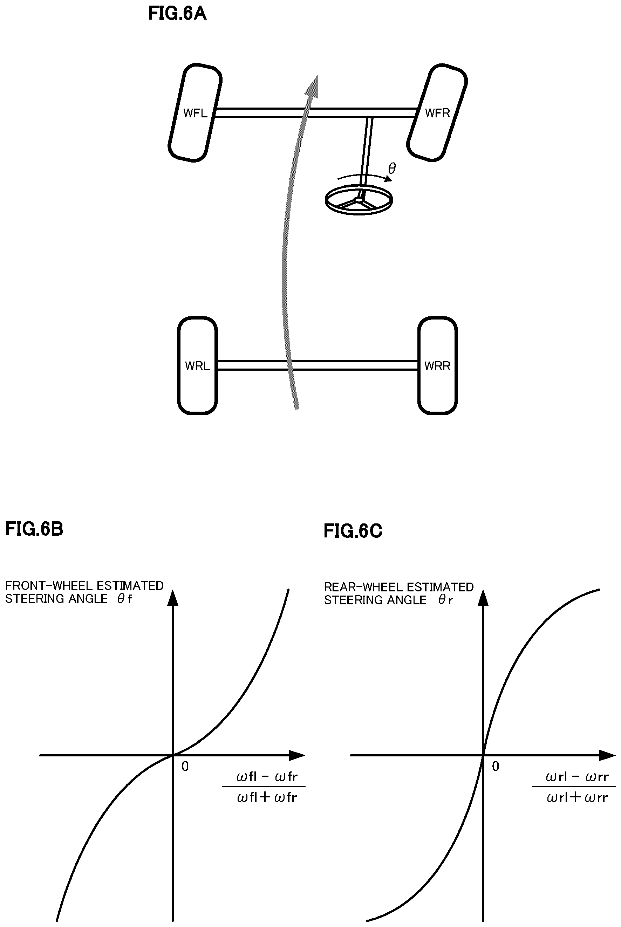

As shown in FIGs.6A, 6B and 6C, the steering angle estimating calculating section 110 (First Embodiment) calculates the front-wheel estimated steering angle θf from a relation equation between the front-wheel speeds and a steering angle θ, and calculates the rear-wheel estimated steering angle θr from a relation equation between the rear-wheel speeds and the steering angle θ.

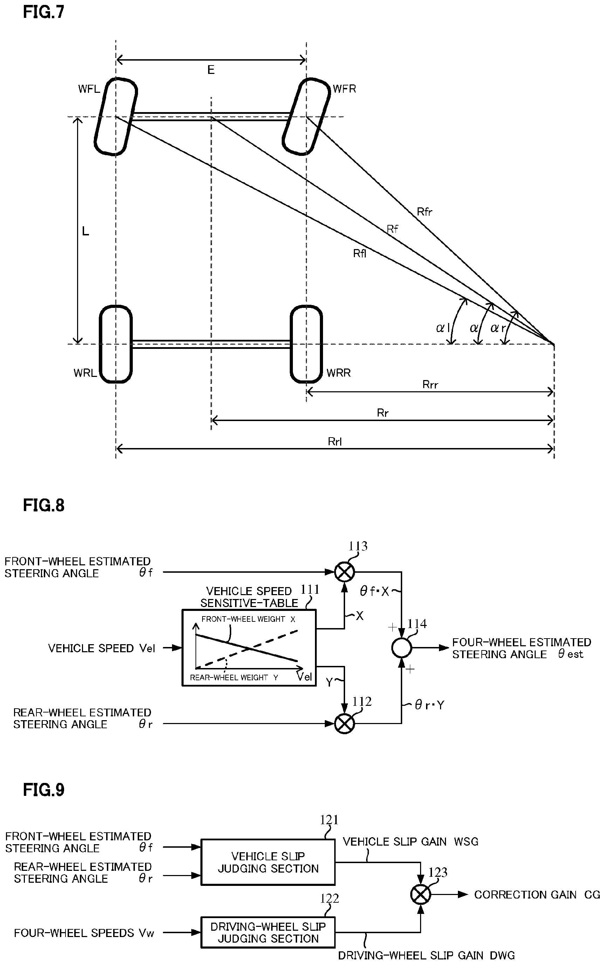

The front-wheel estimated steering angle θf, the rear-wheel estimated steering angle θr and the four-wheel estimated steering angle θest are calculated from the four-wheel speeds Vw at the steering angle estimating calculating section 110. A known method which is disclosed in, for example, Japanese Patent No.4167959 B2 is used to calculate the front-wheel estimated steering angle θf and the rear-wheel estimated steering angle θr. As shown in FIG.7, turning radiuses of the four wheels fl, fr, rl and rr are respectively defined as Rfl, Rfr, Rrl and Rrr, the steering angles of the front wheels fl and fr are respectively defined as αl and αr, a wheelbase of the vehicle is defined as L, and a vehicle width is defined as E. Further, turning radiuses of a front-wheel center and a rear-wheel center are respectively defined as Rf and Rr. The wheel speeds (wheel angular speeds) of the left-front-wheel fl, right-front-wheel fr, left-rear-wheel rl and right-rear-wheel rr are defined as ωfl, ωfr, ωrl and corr, respectively. The steering angle α of the vehicle center and the respective wheel speeds ωfl, ωfr, ωrl and corr have relationships shown in below Equations 1 and 2.

[Equation 1]

$$\alpha_{front} = \frac{1}{2}\arcsin\left\{\frac{4L}{E}\left(\frac{\omega_{fl}-\omega_{fr}}{\omega_{fl}+\omega_{fr}}\right)\right\}$$

[Equation 2]

$$\alpha_{rear} = \arctan\left\{\frac{2L}{E}\left(\frac{\omega_{rl}-\omega_{rr}}{\omega_{rl}+\omega_{rr}}\right)\right\}$$

As well, with respect to the 4-wheel estimated steering angle θest, it is possible to increase a robust property against erroneous estimation due to a wheel speed disturbance by using an average value of the front-wheel estimated steering angle θf and the rear-wheel estimated steering angle θr as in Equation 3 described below.

[Equation 3]

$$\theta est = (\theta f + \theta r)/2$$

Or, other than the above average value, the four-wheel estimated steering angle θest can also calculate the average value of the weighted front-wheel estimated steering angle θf and the weighted rear-wheel estimated steering angle θr by varying a front-wheel weight X of the front-wheel estimated steering angle θf and a rear-wheel weight Y of the rear-wheel estimated steering angle θr depending on the vehicle speed Vel. In this case, the equation is represented by a following Equation 4.

[Equation 4]

$$\theta est = (\theta f \times X + \theta r \times Y)$$

$$X + Y = 1.0$$

In a case that the front-wheel weight X of the front-wheel estimated steering angle θf and the rear-wheel weight Y of the rear-wheel estimated steering angle θr are varied depending on the vehicle speed Vel, a configuration of weighting section in the steering angle estimating calculating section 110 is shown in, for example, FIG.8 (Example 1-1). That is, the front-wheel weight X and the rear-wheel weight Y are outputted with a relationship of "X + Y = 1.0", from a vehicle speed sensitive table 111 which is sensitive to the vehicle speed Vel. The rear-wheel weight Y is multiplied by the rear-wheel estimated steering angle θr at a multiplying section 112, and the front-wheel weight X is multiplied by the front-wheel estimated steering angle θf at a multiplying section 113. Respective multiplied results at the multiplying sections 112 and 113 are added at an adding section 114, and the added value is outputted as the four-wheel estimated steering angle θest.

The vehicle speed sensitive-table 111 sets, for example, "X=0.8" and "Y=0.2" in a low vehicle speed. In a high vehicle speed, since the front wheels become a half-slip state at the turning and an estimating precision reduces, the rear-wheel weight Y of the rear-wheel estimated steering angle θr is enlarged as "X=0.2" and "Y=0.8".

As well, although the front-wheel weight X and the rear-wheel weight Y are varied linearly in FIG.8, the above values may be varied nonlinearly. Further, although the front-wheel weight X and the rear-wheel weight Y are varied based on the vehicle speed in FIG.8, the above values may be varied depending on the steering angular velocity (Example 1-2) or the steering torque (Example 1-3).

The correction gain calculating section 120 judges a vehicle slip and a driving-wheel slip by using the front-wheel estimated steering angle θf, the rear-wheel estimated steering angle θr and the four-wheel speeds Vw, and calculating the correction gain CG in order to correct the certainty of the four-wheel estimated steering angle θest. As shown in FIG.9, the correction gain calculating section 120 comprises a vehicle slip judging section 121 and a driving-wheel slip judging section 122. A vehicle slip gain WSG and a driving-wheel slip gain DWG, which are calculated from the vehicle slip judging section 121 and the driving-wheel slip judging section 122, respectively, are multiplied at a multiplying section 123, and a calculation is performed such that the multiplying result is outputted as the correction gain CG.

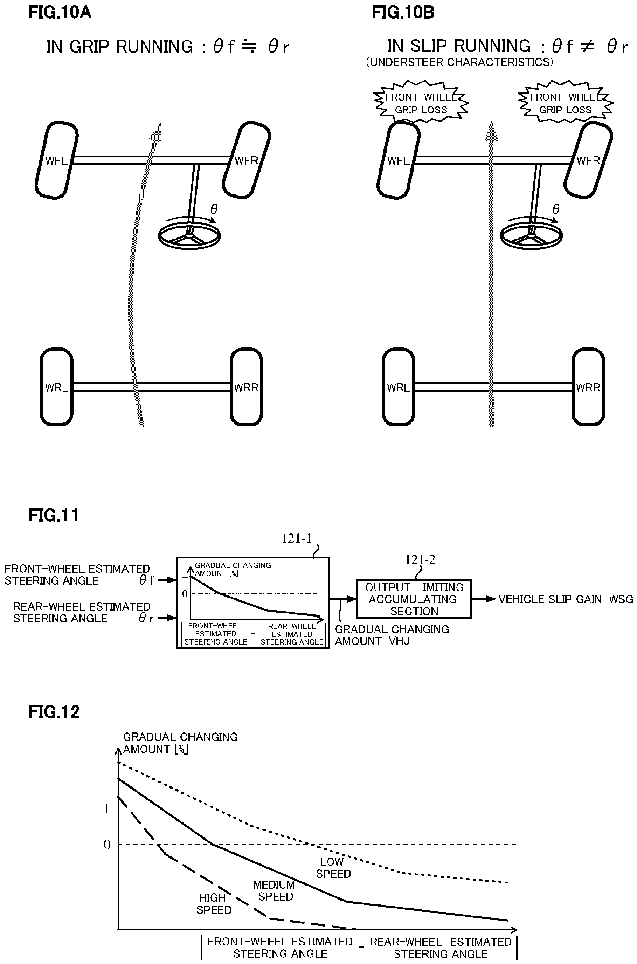

The vehicle slip judging section 121 judges the vehicle slip by using a characteristic that a relation "the front-wheel estimated steering angle θf" ≒ "the rear-wheel estimated steering angle θr" is established at a grip running maneuver as shown in FIG.10A, and any one wheel speed of the four wheels slips as shown in FIG.10B in a vehicle slip state and a difference "the front-wheel estimated steering angle θf" ≠ "the rear-wheel estimated steering angle θr" is occurred. Further, as shown in FIG.11, the vehicle slip judging section 121 calculates a gradual-changing amount VHJ for a vehicle slip gain at a gradual-changing amount calculating section 121-1 depending on an absolute value of the difference between the front-wheel estimated steering angle θf and the rear-wheel estimated steering angle θr, transforms the gradual-changing amount VHJ for the vehicle slip gain to a vehicle slip gain WSG via an output-limiting accumulating section 121-2, and increases or decreases the vehicle slip gain WSG. In a case that the difference between the front-wheel estimated steering angle θf and the rear-wheel estimated steering angle θr is large, the vehicle slip gain WSG is sharply decreased, and in a case that the difference between the front-wheel estimated steering angle θf and the rear-wheel estimated steering angle θr is small, the vehicle slip gain WSG is gradually increased.

In the calculating of the above vehicle slip gain WSG, the feature resides in that: the vehicle slip gain WSG is sharply decreased in a case that the vehicle is slipped in a curve on a snowy road (a state that the difference between the front-wheel estimated steering angle θf and the rear-wheel estimated steering angle θr is large), and the vehicle slip gain WSG is gradually increased in a case that the vehicle is in the grip state (a state that the difference between the front-wheel estimated steering angle θf and the rear-wheel estimated steering angle θr is small) being the straight running.

As shown in FIG.12, the gradual-changing amount VHJ for the vehicle slip gain is changed depending on the vehicle speed. Since the slip is hardly occurred in the low speed, a threshold which is compared with the absolute value of the difference between the front-wheel estimated steering angle θf and the rear-wheel estimated steering angle θr is larger. Since the slip tends to be occurred in the high speed, the threshold which is compared with the absolute value of the difference between the front-wheel estimated steering angle θf and the rear-wheel estimated steering angle θr is smaller. The above setting is changed by a control function which uses the four-wheel estimated steering angle. Even in the high speed, the absolute value of the difference between the front-wheel estimated steering angle θf and the rear-wheel estimated steering angle θr can be larger.

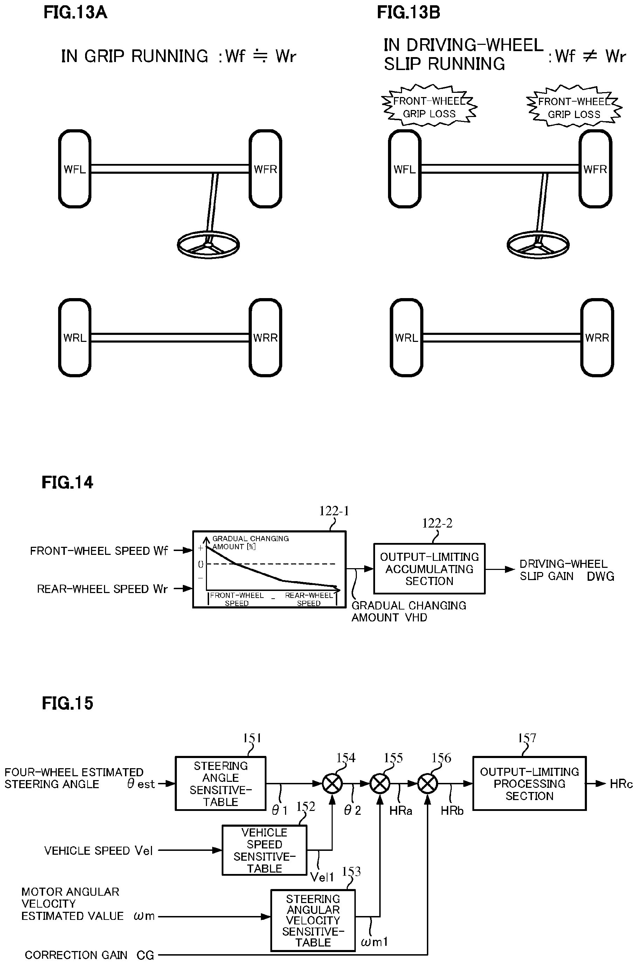

On the other hand, the driving-wheel slip judging section 122 judges the vehicle slip by using a characteristic that a relation "the front-wheel speed Wf" ≒ "the rear-wheel speed Wr" is established at a driving-wheel grip running maneuver as shown in FIG.13A, and the driving-wheel such as the front-wheel or the rear-wheel slips as shown in FIG.13B in a slip state of the driving-wheel and a difference "the front-wheel speed Wf" ≠ "the rear-wheel speed Wr" is occurred. From a relationship of the front-wheel left and right wheel speeds WFL and WFR, and the rear-wheel left and right wheel speeds WRL and WRR, the front-wheel speed Wf and the rear-wheel speed Wr can be calculated by following Equations 5 and 6, respectively.

[Equation 5]

$$Wf = (WFL + WFR)/2$$

[Equation 6]

$$Wr = (WRL + WRR)/2$$

Furthermore, as shown in FIG.14, the driving-wheel slip judging section 122 calculates a gradual-changing amount VHD for a driving-wheel slip gain at a gradual-changing amount calculating section 122-1 depending on the difference between the front-wheel speed Wf and the rear-wheel speed Wr, transforms the gradual-changing amount VHD for the driving-wheel slip gain to a driving-wheel slip gain DWG via an output-limiting accumulating section 122-2, and increases or decreases the driving-wheel slip gain DWG. In a case that the difference between the front-wheel speed Wf and the rear-wheel speed Wr is large, the driving-wheel slip gain DWG is sharply decreased, and in a case that the difference between the front-wheel speed Wf and the rear-wheel speed Wr is small, the driving-wheel slip gain DWG is gradually increased.

In a case that the vehicle is operated with a jump start on the snowy road (a state that the difference between the front-wheel speed Wf and the rear-wheel speed Wr is large), the calculating of the above driving-wheel slip gain DWG makes the driving-wheel slip gain DWG sharply decrease. In a case that the vehicle is the grip state (a state that the difference between the front-wheel speed Wf and the rear-wheel speed Wr is small), the driving-wheel slip gain DWG is gradually increased.

The vehicle slip gain WSG and the driving-wheel slip gain DWG can adjust for respective gains from a sharp changing to a gradual changing by setting the tunable constants, and can also adjust the responsibility when correcting the four-wheel estimated steering angle θest and the control output by using the four-wheel estimated steering angle θest.

The handle-returning control section 150 calculates the handle-returning (active return) control value HRC by using the four-wheel estimated steering angle θest and the correcting gain CG, and limits the handle-returning (active return) control value HRC when occurring the vehicle slip or the driving-wheel slip. Since the handle-returning control value HRC is calculated based on the four-wheel estimated steering angle θest, the unintended handle-returning control value HRC by means of the misestimated four-wheel estimated steering angle θest is outputted incorrectly when just occurring the vehicle slip or the driving-wheel slip. When occurring the vehicle slip or the driving-wheel slip, the correction gain CG is decreased and then it is possible to restrict the above incorrected output.

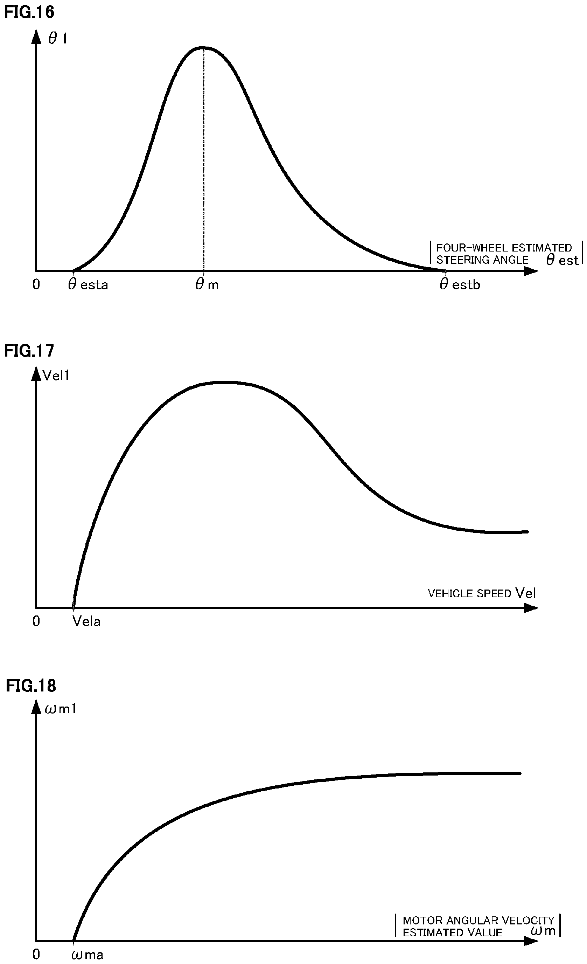

FIG.15 shows a configuration example of the handle-returning control section 150. The four-wheel estimated steering angle θest is inputted into a steering angle sensitive-table 151 which has a characteristic as shown in FIG.16, and then a steering angle θ1, which is outputted from the steering angle sensitive-table 151, is inputted into a multiplying section 154. The characteristic of the steering angle sensitive-table 151 to an absolute value of the four-wheel estimated steering angle θest is shown in FIG.16. That is, the steering angle θ1 is gradually larger when the absolute value of the four-wheel estimated steering angle θest is larger than the four-wheel estimated steering angle θesta, has a peak when the absolute value of the four-wheel estimated steering angle θest is equal to "θm", is gradually smaller when the absolute value of the four-wheel estimated steering angle θest is larger than the four-wheel estimated steering angle θm, and is zero when the absolute value of the four-wheel estimated steering angle θest is larger than or equal to the four-wheel estimated steering angle θestb. Further, the vehicle speed Vel is inputted into a vehicle speed sensitive-table 152 which has a characteristic as shown in FIG.17, and an output Veil of the vehicle speed sensitive-table 152 is inputted into the multiplying section 154. The motor angular velocity estimated value ωm is inputted into a steering angular velocity sensitive-table 153 which has a characteristic as shown in FIG.18, and an output ωm1 of the steering angular velocity sensitive-table 153 is inputted into a multiplying section 155.

The characteristic of the vehicle speed sensitive-table 152 is that as shown in FIG.17, for example, the output Vel1 is sharply and nonlinearly increased when the vehicle speed Vel is larger than the low vehicle speed Vela and is gradually decreased after a predetermined peak. Further, the characteristic of the steering angular velocity sensitive-table 153 has a characteristic that the output ωm1 gradually and nonlinearly increases from the motor angular velocity estimated value coma for an absolute value of the motor angular velocity estimated value ωm as shown in FIG.18.

The output θ1 is multiplied by the output Vel1 at the multiplying section 154, the multiplied result 82 is inputted into the multiplying section 155 and is multiplied by the output ωm1 at the multiplying section 155, and the multiplied result HRa is inputted into a multiplying section 156 and is multiplied by the correction gain CG at the multiplying section 156. A basic control value HRb, which is obtained at the multiplying section 156, is inputted into an output-limiting processing section 157, and the handle-returning control value HRC whose output is limited, is outputted.

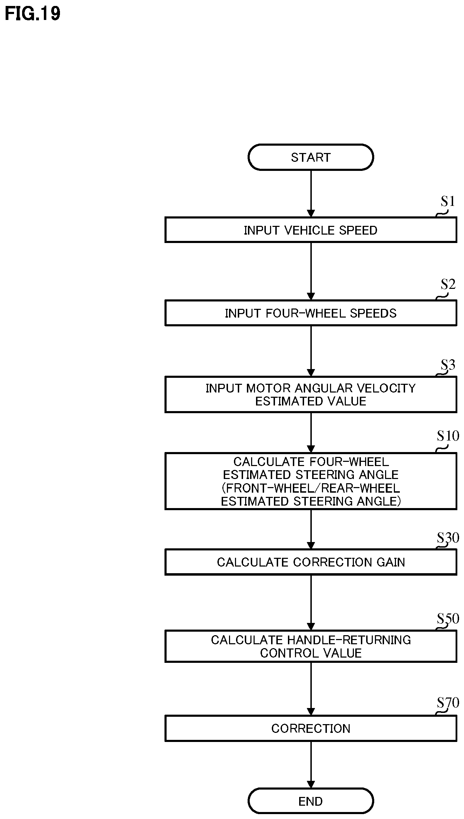

In such a configuration, an overall operation example will be described with reference to a flowchart of FIG.19 and the configuration example of FIG.4.

The vehicle speed Vel (Step S1), the four-wheel speeds Vw (Step S2) and the motor angular velocity estimated value ωm (Step S3) are respectively inputted into the steering angle estimating section 100. These input orders are appropriately changeable. The steering angle estimating section 100 calculates the front-wheel estimated steering angle θf and the rear-wheel estimated steering angle θr based on the inputted vehicle speed Vel, the four-wheel speeds Vw and the motor angular velocity estimated value ωm, and calculates and outputs the four-wheel estimated steering angle θest (Step S10). The steering angle estimating section 100 also calculates and outputs the correction gain CG (Step S30). The four-wheel estimated steering angle θest and the correction gain CG are inputted into the handle-returning control section 150. The handle-returning control section 150 calculates the handle-returning control value based on the four-wheel estimated steering angle θest (Step S50) and corrects the handle-returning control value based on the correction gain CG (Step S70). The handle-returning control value HRC is added to the current command value Iref1 at the adding section 160.

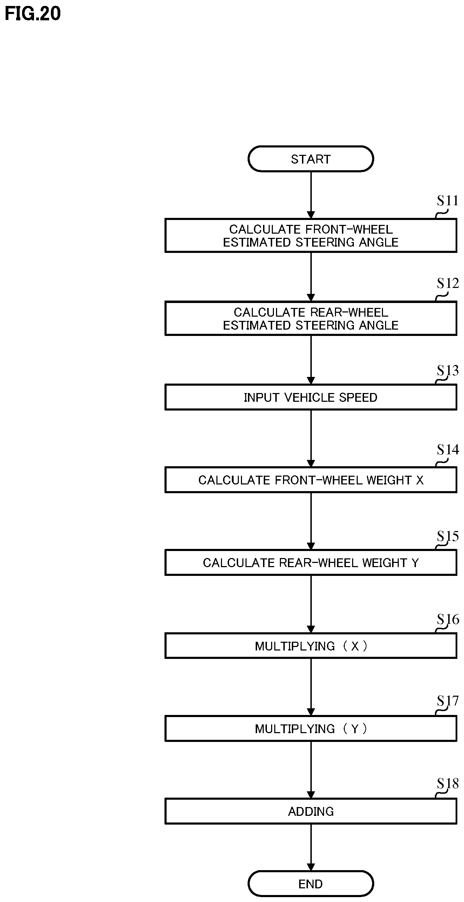

Next, in the steering angle estimating calculating section 110, an operation example of the weighting section, which weights the front-wheel weight X and the rear-wheel weight Y to the front-wheel estimated steering angle θf and the rear-wheel estimated steering angle θr, respectively, will be described with reference to a flowchart of FIG.20 and the configuration example of FIG.8.

At first, in the steering angle estimating calculating section 110, the front-wheel estimated steering angle θf is calculated (Step S11), and then the rear-wheel estimated steering angle θr is calculated (Step S12). This order may be changeable. The vehicle speed Vel is inputted into the vehicle speed sensitive-table 111 of the weighting section (Step S13), and the vehicle speed sensitive-table 111 calculates the front-wheel weight X (Step S14) and the rear-wheel weight Y (Step S15) depending on the vehicle speed Vel. The front-wheel weight X is inputted into the multiplying section 113 and is multiplied by the front-wheel estimated steering angle θf (Step S16), and a multiplied result "θf·X" is inputted into the adding section 114. The rear-wheel weight Y is inputted into the multiplying section 112 and is multiplied by the rear-wheel estimated steering angle θr (Step S17), and a multiplied result "θr·Y" is inputted into the adding section 114. The adding section 114 adds the multiplied result "θf·X" to the multiplied result "θr·Y" and outputs the four-wheel estimated steering angle θest that is the added result (Step S18).

Besides, a calculating order of the front-wheel X and the rear-wheel Y, and a multiplying order at the multiplying sections 112 and 113 are appropriately changeable.

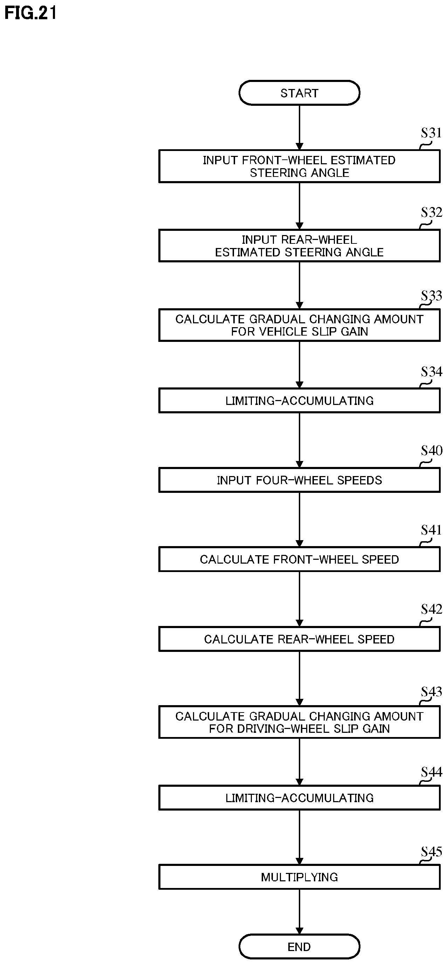

Next, an operation example of the correction gain calculating section 120 will be described with reference to a flowchart of FIG.21 and the configuration examples of FIG.9, FIG.11 and FIG.14.

The front-wheel estimated steering angle θf (Step S31) and the rear-wheel estimated steering angle θr (Step S32) are respectively inputted into the vehicle slip judging section 121 in the correction gain calculating section 120. The vehicle slip judging section 121 calculates the gradual-changing amount VHJ for the vehicle slip gain at the gradual-changing amount calculating section 121-1 depending on the absolute value of the difference between the front-wheel estimated steering angle θf and the rear-wheel estimated steering angle θr (Step S33), limiting-accumulates the gradual-changing amount VHJ for the vehicle slip gain at the output-limiting accumulating section 121-2, and outputs the vehicle slip gain WSG (Step S34).

The four-wheel speeds Vw is inputted into the driving-wheel slip judging section 122 in the correction gain calculating section 120 (Step S40), and the front-wheel speed Wf and the rear-wheel speed Wr are calculated based on the four-wheel speeds Vw (Step S41 and Step S42). The driving-wheel slip judging section 122 calculates the gradual-changing amount VHD for the driving-wheel slip gain depending on the absolute value of the difference between the front-wheel speed Wf and the rear-wheel speed Wr at the gradual-changing amount calculating section 122-1 (Step S43), limiting-accumulates the gradual-changing amount VHD for the driving-wheel slip gain at the output-limiting accumulating section 122-2, and outputs the driving-wheel slip gain DWG (Step S44).

The vehicle slip gain WSG and the driving-wheel slip gain DWG are inputted into the multiplying section 123, and the multiplied result of the multiplying section 123 is outputted as the correction gain CG (Step S45).

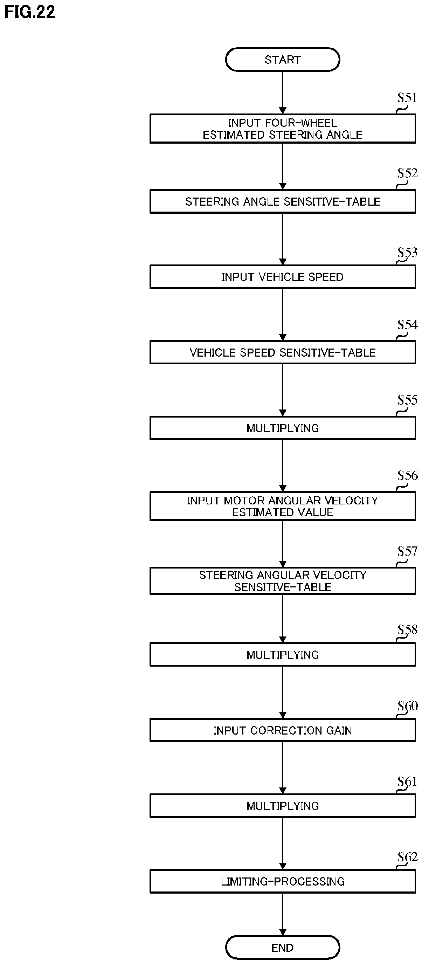

Next, an operation example of the handle-returning control section 150 will be described with reference to a flowchart of FIG.22 and the configuration example of FIG.15.

At first, the four-wheel estimated steering angle θest is inputted into the steering angle sensitive-table 151 (Step S51), and the steering angle sensitive-table 151 outputs the steering angle θ1 depending on the four-wheel estimated steering angle θest (Step S52). The vehicle speed Vel is inputted into the vehicle speed sensitive-table 152 (Step S53), the vehicle speed sensitive-table 152 outputs the output Vel1 depending on the vehicle speed Vel (Step S54), and the output Vel1 is multiplied by the steering angle θ1 at the multiplying section 154 (Step S55). Further, the motor angular velocity estimated value ωm is inputted into the steering angular velocity sensitive-table 153 (Step S56), and the steering angular velocity sensitive-table 153 outputs the angular velocity ωm1 depending on the motor angular velocity estimated value ωm (Step S57). The angular velocity ωm1 is inputted into the multiplying section 155 and is multiplied by the multiplied result θ2 of the multiplying section 154 (Step S58). Then, a basic control value HRa which is the multiplied result is inputted into the multiplying section 156.

Thereafter, the correction gain CG, which is calculated at the correction gain calculating section 120, is inputted into the multiplying section 156 (Step S60) and is multiplied by the basic control value HRa (Step S61). The basic control value HRb, which is a multiplied result of the multiplying section 156, is inputted into the output-limiting processing section 157 and the output-limiting processing section 157 outputs the handle-returning control value HRC whose maximum value is limited (Step S62). The handle-returning control value HRC is inputted into the adding section 160.

In the above first embodiment, although the robustness is raised by varying the front-wheel weight X of the front-wheel estimated steering angle $\theta f$ and the rear-wheel weight Y of the rear-wheel estimated steering angle $\theta r$ depending on the vehicle speed Vel, it is possible to more accurately calculate the four-wheel estimated steering angle $\theta est$ by varying the front-wheel weight X and the rear-wheel weight Y depending on not only the vehicle speed but also the running state (turning road, gravel road, debris road, acceleration and deceleration and so on) of the vehicle.

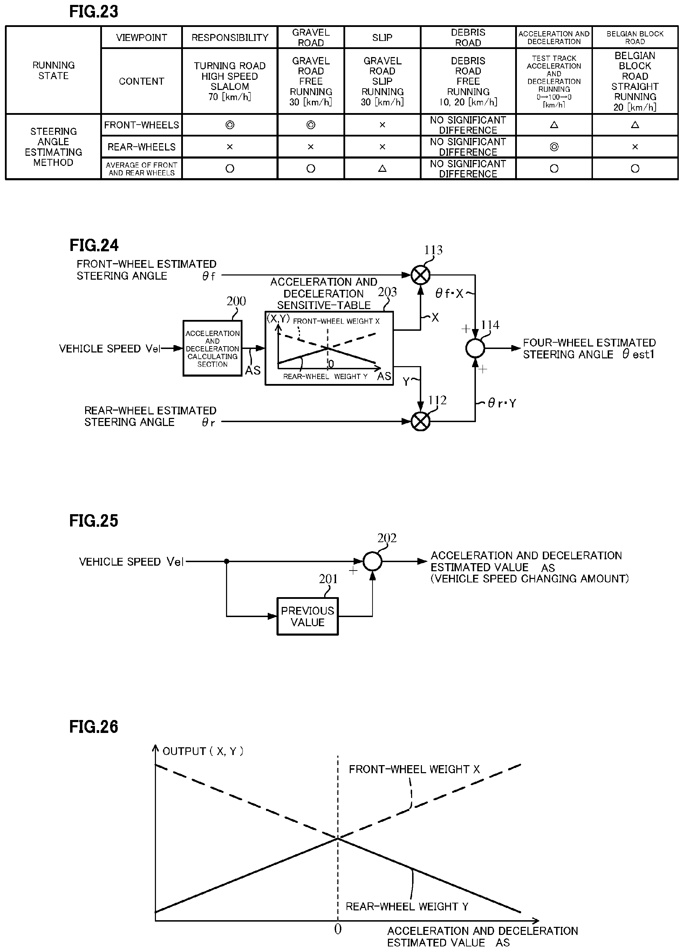

FIG.23 is a diagram showing merits and demerits when responsibilities are selected as a viewpoint in a case that various running states of an actual running vehicle are selected and a steering angle estimating method at the time. In a case that the viewpoint is "responsibility" and a content is "turning road, high-speed slalom, and 70[km/h]", in the steering angle estimating method, the front-wheel estimated steering angle and the average estimated steering angle of the front wheels and the rear wheels obtain an extremely good evaluation, and the rear-wheel estimated steering angle obtains a bad evaluation. Similarly, in a case that the viewpoint is "gravel road" and the content is "gravel road, free running, and 30[km/h]", in the steering angle estimating method, the front-wheel estimated steering angle and the average estimated steering angle of the front wheels and the rear wheels obtain an extremely good evaluation, and the rear-wheel estimated steering angle obtains a bad evaluation. However, in a case that the viewpoint is "slip" and the content is "gravel road, slip running, and 30[km/h]", in the steering angle estimating method, the front-wheel estimated steering angle and the rear-wheel estimated steering angle obtain a bad evaluation, and the average estimated steering angle of the front wheels and the rear wheels obtains a slightly good evaluation. Further, in a case that the viewpoint is "acceleration and deceleration" and the content is "test track, acceleration and deceleration running, and $0 \rightarrow 100 \rightarrow 0$[km/h]", in the steering angle estimating method, the rear-wheel estimated steering angle obtains an extremely good evaluation, the average estimated steering angle of the front wheels and the rear wheels obtains a good evaluation, and the front-wheel estimated steering angle also obtains a slightly good evaluation.

In this manner, since a quality difference for the calculating method of the estimated steering angle is occurred due to the running state of the vehicle, in a second embodiment of the present invention, a configuration that the front-wheel weight X of the front-wheel estimated steering angle and the rear-wheel weight Y of the rear-wheel estimated steering angle are varied depending on the running state of the vehicle, is adopted.

In the acceleration and deceleration running, the acceleration and deceleration is estimated from the vehicle speed Vel, and the front-wheel weight X of the front-wheel estimated steering angle $\theta f$ and the rear-wheel weight Y of the rear-wheel estimated steering angle $\theta r$ are varied sensitive to the acceleration and deceleration (Example 2-1). FIG.24 is a block diagram showing a configuration example of the weighting section of the steering angle estimating section in the acceleration and deceleration running corresponding to FIG.8. The vehicle speed Vel is inputted into an acceleration and deceleration calculating section 200, a calculated acceleration and deceleration estimated value AS is inputted into an acceleration and deceleration sensitive-table 203, and the front-wheel weight X and the rear-wheel weight Y are calculated. The acceleration and deceleration calculating section 200 calculates the acceleration and deceleration estimated value (vehicle speed changing amount) AS from the vehicle speed Vel. As shown in FIG.25, the acceleration and deceleration calculating section 200 has a memory unit 201 that stores a previous value. By subtracting the previous value from a present value of the vehicle speed Vel at subtracting section 202, the acceleration and deceleration estimated value AS can be calculated. The vehicle speed Vel may be differentiated. The acceleration and deceleration estimated value AS is inputted into the acceleration and deceleration sensitive-table 203, and the front-wheel weight X and the rear-wheel weight Y are calculated in accordance with a characteristic as shown in FIG.26.

A four-wheel estimated steering angle $\theta est1$ is calculated as follows. When the acceleration and deceleration estimated value AS is near zero, the four-wheel estimated steering angle $\theta est1$ sets an average value of the front-wheel estimated steering angle $\theta f$ and the rear-wheel estimated steering angle $\theta r$ by setting the front-wheel weight X equivalent to the rear-wheel weight Y. In the deceleration (the acceleration and deceleration estimated value AS < 0) and in the acceleration (the acceleration and deceleration estimated value AS > 0), the four-wheel estimated steering angle $\theta est1$ is calculated, with the front-wheel estimated steering angle $\theta f$, by increasing the front-wheel weight X (decreasing the rear-wheel weight Y).

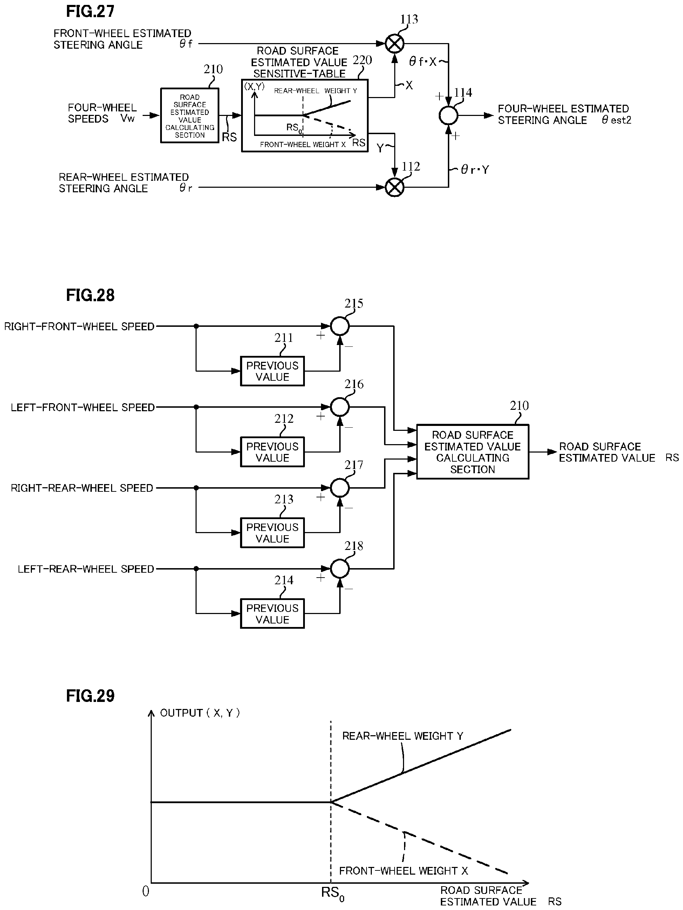

Next, Example 2-2 that a road surface disturbance is estimated from the four-wheel speeds Vw, and the front-wheel weight X of the front-wheel estimated steering angle $\theta f$ and the rear-wheel weight Y of the rear-wheel estimated steering angle $\theta r$ are respectively varied sensitive to a road surface estimated value RS, will be described. As shown in FIG.27, the four-wheel speeds Vw is inputted into a road surface estimated value calculating section 210, and the road surface estimated value calculating section 210 estimates a rough road based on positive and negative peak values of differences of the respective wheel speeds to the average value of the four-wheel speeds Vw. As shown in FIG.28, the four-wheel speeds are inputted into a changing amount calculating section that comprises memory units 211 to 214 and subtracting sections 215 to 218, as described in FIG.25. The changing amount calculating section calculates the changing amounts of the wheel speeds in the respective wheels, judges whether the vehicle runs on the rough road from the maximum acceleration and deceleration, and calculates the road surface estimated value RS. A wheel-speed vibration frequency by means of the road surface disturbance is adjusted by changing the previous value to a previous-but-one value or the like, or by changing a calculating period. The road surface estimated value calculating section 210 calculates the maximum value from absolute values of changing amounts of the respective wheel speeds, and this maximum value is set as the road surface estimated value RS.

The road surface estimated value RS is inputted into a road surface estimated value sensitive-table 220 that has a characteristic as shown in FIG.29, and the front-wheel weight X and the rear-wheel weight Y are calculated at the road surface estimated value sensitive-table 220. That is, a four-wheel steering angle estimated value $\theta$est2 is calculated as follows. When the road surface estimated value RS is near zero, the four-wheel steering angle estimated value $\theta$est2 sets an average value of the front-wheel estimated steering angle $\theta$f and the rear-wheel estimated steering angle $\theta$r by setting the front-wheel weight X equivalent to the rear-wheel weight Y, and when the road surface is a rough state (the road surface estimated value RS is larger than or equal to a predetermined value $RS_0$, that is, the road surface estimated value RS is from a medium area to a large area), the four-wheel estimated steering angle $\theta$est2 is calculated, with the rear-wheel estimated steering angle $\theta$r, by increasing the rear-wheel weight Y (decreasing the front-wheel weight X).

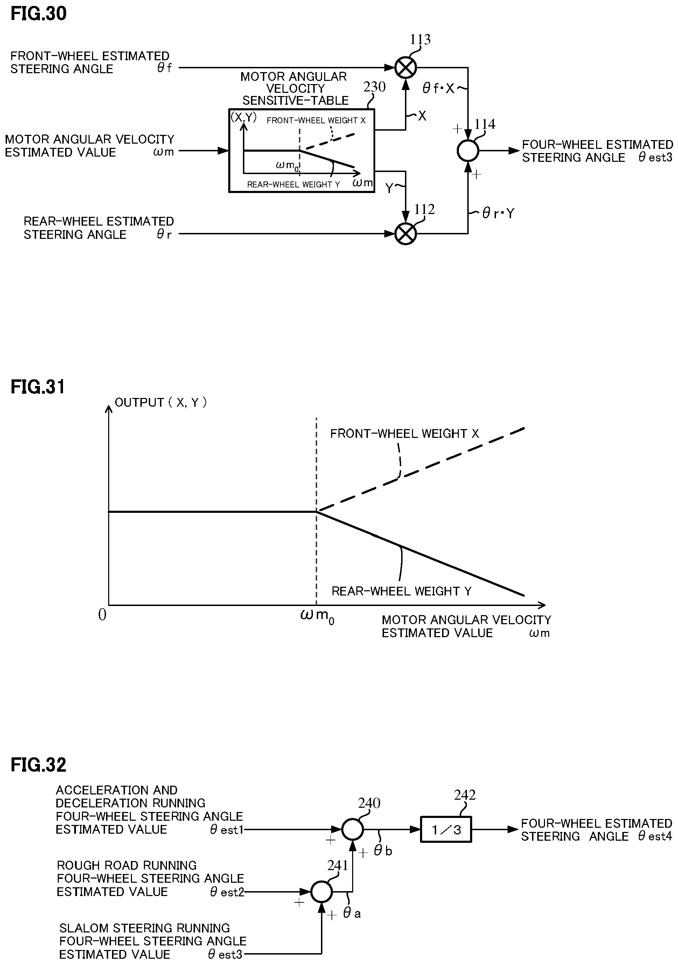

Furthermore, the rate of the front-wheel estimated steering angle and the rear-wheel estimated steering angle may be varied sensitive to the motor angular velocity estimated value (steering angular velocity), that is, the front-wheel weight X and the rear-wheel weight Y may be varied (Example 2-3). The motor angular velocity estimated value $\omega$m may be calculated from a steering angular velocity sensor or a resolver angle. FIG.30 shows the configuration example, and the motor angular velocity estimated value $\omega$m is inputted into a motor angular velocity sensitive-table 230 and the motor angular velocity sensitive-table 230 calculates the front-wheel weight X and the rear-wheel weight Y in accordance with a characteristic as shown in FIG.31. That is, a four-wheel steering angle estimated value $\theta$est3 is calculated as follows. When the motor angular velocity estimated value $\omega$m is a low area (less than a predetermined value $\omega m_0$), the four-wheel steering angle estimated value $\theta$est3 sets an average value of the front-wheel estimated steering angle $\theta$f and the rear-wheel estimated steering angle $\theta$r by setting the front-wheel weight X equivalent to the rear-wheel weight Y. When the motor angular velocity estimated value $\omega$m is a high area which is higher than or equal to the predetermined value $\omega m_0$, the four-wheel estimated steering angle $\theta$est3 is calculated, with the front-wheel estimated steering angle $\theta$f, by increasing the front-wheel weight X (decreasing the rear-wheel weight Y).

Since there is a possibility that an output of the motor angular velocity sensitive-table 230 suddenly changes due to a sudden change of the motor angular velocity estimated value or the steering angular velocity sensor, a filter or a rate-limiting process may be added to the input signal (Example 2-4).

Further, in order to deal with all of running states, the four-wheel estimated steering angle corresponding to all of the running states may be calculated by using an average value of four-wheel steering angle estimated values which are calculated for respective running states in the acceleration and deceleration running, the rough road running and the slalom steering running with the configuration as shown in FIG.32, with the four-wheel steering angle estimated value $\theta$est1 in the above-described acceleration and deceleration running maneuver, the four-wheel steering angle estimated value $\theta$est2 in the rough road running maneuver and the four-wheel steering angle estimated value $\theta$est3 in the slalom steering running maneuver (Example 2-5). That is, the four-wheel steering angle estimated value $\theta$est2 in the rough road running maneuver and the four-wheel steering angle estimated value $\theta$est3 in the slalom steering running maneuver are added at an adding section 241, and an estimated value $\theta$a which is the added result, is added to the four-wheel steering angle estimated value $\theta$est1 in the acceleration and deceleration running maneuver at an adding section 240. An estimated value $\theta$b, which is the added result, is inputted into a dividing section (or a multiplying section) 242, and the dividing section (or the multiplying section) 242 performs a calculation "$\theta b \cdot 1/3$" and calculates a four-wheel estimated steering angle $\theta$est4.

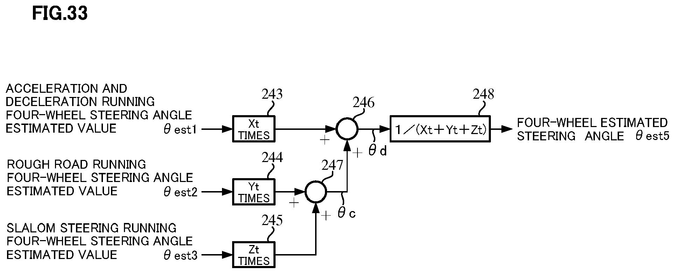

As shown in FIG.33, the four-wheel steering angle estimated value $\theta$est1 in the acceleration and deceleration running maneuver, the four-wheel steering angle estimated value $\theta$est2 in the rough road running maneuver and the four-wheel steering angle estimated value $\theta$est3 in the slalom steering running maneuver are weighted with weights Xt, Yt and Zt (Xt+Yt+Zt=1.0), respectively, and then a four-wheel estimated steering angle $\theta$est5 being an average value may be calculated at a calculating section 248 (Example 2-6).

As well, in the above explanation, although the handle-returning (active return) control is described as an example, it is possible to apply to other controls (a lane keep assist which prevents from lane deviation, an active corner lamp which light is directed to a steering angle direction and so on).

Explanation of Reference Numerals

1      handle (steering wheel)
2      column shaft (steering shaft, handle shaft)
10     torque sensor
12     vehicle speed sensor
13     battery
20     motor

31      current command value calculating section
32      handle-returning control section
33      current limiting section
35      current control section
36      PWM-control section
37      inverter
100     steering angle estimating section
110     steering angle estimating calculating section
111     vehicle speed sensitive-table
120     correction gain calculating section
121     vehicle slip judging section
122     driving-wheel slip judging section
150     handle-returning (active return) control section
151     steering angle sensitive-table
152     vehicle speed sensitive-table
153     steering angle speed sensitive-table
200     acceleration and deceleration calculating section
203     acceleration and deceleration sensitive-table
210     road surface estimated value calculating section
220     road surface estimated value sensitive-table
230     motor angular velocity sensitive-table

**Claims**

1.  An electric power steering apparatus that comprises a torque sensor to detect a steering torque which is inputted into a steering mechanism of a vehicle, a current command value calculating section to calculate a current command value based on at least said steering torque, a motor to generate a steering assist torque applied to said steering mechanism, and a motor control section to driving-control said motor based on said current command value, comprising:

    a steering angle estimating calculating section to vary a front-wheel weight X of a front-wheel estimated steering angle and a rear-wheel weight Y of a rear-wheel estimated steering angle corresponding to a running state of said vehicle and calculate a four-wheel estimated steering angle based on said front-wheel weight X and said rear-wheel weight Y (X+Y=1.0),
    **characterised in that**
    in a case that said running state of said vehicle is an acceleration running or a deceleration running, said electric power steering apparatus further comprises:

    an acceleration and deceleration calculating section to calculate an acceleration and deceleration estimated value from a vehicle speed; and
    an acceleration and deceleration sensitive-table to calculate said front-wheel weight X and said rear-wheel weight Y based on said acceleration and deceleration estimated value.

2.  The electric power steering apparatus according to Claim 1, wherein said acceleration and deceleration calculating section comprises a differential section to differentiate said vehicle speed, or a memory unit to store a previous value of said vehicle speed and a subtracting section to subtract said previous value from a present value.

3.  The electric power steering apparatus according to Claim 1 or 2, wherein said acceleration and deceleration sensitive-table sets said front-wheel weight X equivalent to said rear-wheel weight Y near a zero value of said acceleration and deceleration estimated value, and makes said front-wheel weight X larger in an acceleration running and a deceleration running.

4.  The electric power steering apparatus according to Claim 1, wherein in a case that said running state of said vehicle is a rough road running, said electric power steering apparatus further comprises:

    a road surface estimated value calculating section to calculate a road surface estimated value from four-wheel speeds of said vehicle; and

a road surface estimated value sensitive-table to calculate said front-wheel weight X and said rear-wheel weight Y based on said road surface estimated value.

5. The electric power steering apparatus according to Claim 4, wherein said road surface estimated value calculating section calculates a variation of a vehicle speed in each of wheels from said four-wheel speeds, and calculates said road surface estimated value by judging said rough road running from a maximum acceleration or a maximum deceleration.

6. The electric power steering apparatus according to Claim 4 or 5, wherein said road surface estimated value sensitive-table sets said front-wheel weight X equivalent to said rear-wheel weight Y near a zero value of said road surface estimated value, and makes said rear-wheel weight Y larger when said road surface estimated value is a predetermined value or more.

7. The electric power steering apparatus according to Claim 1, wherein in a case that said running state of said vehicle is a slalom steering driving, said electric power steering apparatus further comprises:
a steering angular velocity sensitive-table to calculate said front-wheel weight X and said rear-wheel weight Y from a motor angular velocity estimated value.

8. The electric power steering apparatus according to Claim 7, wherein said steering angular velocity sensitive-table sets said front-wheel weight X equivalent to said rear-wheel weight Y in an area that said motor angular velocity estimated value is small, and makes said front-wheel weight X larger when said motor angular velocity estimated value is a predetermined value or more.

9. The electric power steering apparatus according to Claim 1, wherein in a case that said running state of said vehicle is an acceleration running, a deceleration running, a rough road running, a slalom steering driving, an average value of a four-wheel estimated steering angle $\theta$est1 which is calculated in said acceleration running and said deceleration running, a four-wheel estimated steering angle $\theta$est2 which is calculated in said rough road running, and a four-wheel estimated steering angle $\theta$est3 which is calculated in said slalom steering driving, is set as said four-wheel estimated steering angle.

10. The electric power steering apparatus according to Claim 9, wherein said four-wheel estimated steering angles $\theta$est1, $\theta$est2 and $\theta$est3 are weighted with Xt, Yt and Zt (Xt+Yt+Zt=1.0), respectively.

**Patentansprüche**

1. Elektrische Servolenkvorrichtung, die aufweist: einen Drehmomentsensor, um ein Lenkdrehmoment, das in einen Lenkmechanismus eines Fahrzeugs eingegeben wird, zu erfassen, einen Strombefehlswert-Berechnungsabschnitt, um wenigstens basierend auf dem Lenkdrehmoment einen Strombefehlswert zu berechnen, einen Motor, um ein Lenkungsunterstützungsdrehmoment, das auf den Lenkmechanismus angewendet wird, zu erzeugen, und einen Motorsteuerabschnitt, um den Motor basierend auf dem Strombefehlswert antriebszusteuern, aufweisend:

einen Lenkwinkel-Schätzungsberechnungsabschnitt, um ein Vorderradgewicht X eines geschätzten Vorderrad-Lenkwinkels und ein Hinterradgewicht Y eines geschätzten Hinterradlenkwinkels entsprechend einem Fahrzustand des Fahrzeugs zu variieren und basierend auf dem Vorderradgewicht X und dem Hinterradgewicht Y (X+ Y = 1,0) einen geschätzten Vierradlenkwinkel zu berechnen,
**dadurch gekennzeichnet, dass**
die elektrische Servolenkvorrichtung in einem Fall, in dem der Fahrzustand des Fahrzeugs eine beschleunigtes Fahren oder ein verlangsamtes Fahren ist, ferner aufweist:

einen Beschleunigungs- und Verlangsamungs-Berechnungsabschnitt, um einen Schätzwert für die Beschleunigung und Verlangsamung zu berechnen; und
eine beschleunigungs- und verlangsamungsempfindliche Tabelle, um das Vorderradgewicht X und das Hinterradgewicht Y basierend auf dem Schätzwert für die Beschleunigung und Verlangsamung zu berechnen.

2. Elektrische Servolenkvorrichtung nach Anspruch 1, wobei der Beschleunigungs- und Verlangsamungs-Berechnungsabschnitt einen Differenzierabschnitt, um die Fahrzeuggeschwindigkeit zu differenzieren, oder eine Speichereinheit, um einen vorhergehenden Wert der Fahrzeuggeschwindigkeit zu speichern, und einen Subtrahierabschnitt, um den vorhergehenden Wert von einem aktuellen Wert zu subtrahieren, aufweist.

3. Elektrische Servolenkvorrichtung nach Anspruch 1 oder 2, wobei die beschleunigungs- und verlangsamungsempfindliche Tabelle das Vorderradgewicht X nahe einem Nullwert des Schätzwerts für die Beschleunigung und Verlangsamung äquivalent zu dem Hinterradgewicht Y festlegt und das Vorderradgewicht X in einem Beschleunigungsfahren und einem Verlangsamungsfahren größer macht.

4. Elektrische Servolenkvorrichtung nach Anspruch 1, wobei die elektrische Servolenkvorrichtung in einem Fall, in dem der Fahrzustand Fahren auf holpriger Straße ist, ferner aufweist:

einen Straßenoberflächen-Schätzwertberechnungsabschnitt, um aus Vierradgeschwindigkeiten des Fahrzeugs einen Straßenoberflächen-Schätzwert zu berechnen,
eine für den Straßenoberflächen-Schätzwert empfindliche Tabelle, um das Vorderradgewicht X und das Hinterradgewicht Y basierend auf dem Straßenoberflächen-Schätzwert zu berechnen.

5. Elektrische Servolenkvorrichtung nach Anspruch 4, wobei der Straßenoberflächen-Schätzwertberechnungsabschnitt aus den Vierradgeschwindigkeiten eine Änderung einer Fahrzeuggeschwindigkeit in jedem der Räder berechnet und einen Straßenoberflächen-Schätzwert durch Bewerten des Fahrens auf holpriger Straße aus einer maximalen Beschleunigung oder einer maximalen Verlangsamung berechnet.

6. Elektrische Servolenkvorrichtung nach Anspruch 4 oder 5, wobei die für den Straßenoberflächen-Schätzwert empfindliche Tabelle das Vorderradgewicht X nahe einem Nullwert des Straßenoberflächen-Schätzwerts äquivalent zu dem Hinterradgewicht Y festlegt und das Hinterradgewicht Y größer macht, wenn der Straßenoberflächen-Schätzwert ein vorgegebener Wert oder höher ist.

7. Elektrische Servolenkvorrichtung nach Anspruch 1, wobei die elektrische Servolenkvorrichtung in einem Fall, in dem der Fahrzustand des Fahrzeugs ein Slalomlenkfahren ist, ferner aufweist:
eine lenkwinkelgeschwindigkeitsempfindliche Tabelle, um das Vorderradgewicht X und das Hinterradgewicht Y aus einem Motorwinkelgeschwindigkeitsschätzwert zu berechnen.

8. Elektrische Servolenkvorrichtung nach Anspruch 7, wobei die lenkwinkelgeschwindigkeitsempfindliche Tabelle in einem Bereich, in dem der Motorwinkelgeschwindigkeitsschätzwert klein ist, das Vorderradgewicht X äquivalent zu dem Hinterradgewicht Y festlegt und das Vorderradgewicht X größer macht, wenn der Motorwinkelgeschwindigkeitsschätzwert ein vorgegebener Wert oder höher ist.

9. Elektrische Servolenkvorrichtung nach Anspruch 1, wobei in einem Fall, in dem der Fahrzustand des Fahrzeugs ein Beschleunigungsfahren, ein Verlangsamungsfahren, ein Fahren auf holpriger Straße, ein Slalomlenkfahren ist, ein Mittelwert eines Vierrad-Schätzlenkwinkels $\theta$est1, der in dem Beschleunigungsfahren und dem Verlangsamungsfahren berechnet wird, ein Vierrad-Schätzlenkwinkel $\theta$est2, der in dem Fahren auf holpriger Straße berechnet wird, und ein Vierrad-Schätzlenkwinkel $\theta$est3, der in dem Slalomlenkfahren berechnet wird, als der Vierrad-Schätzlenkwinkel festgelegt wird.

10. Elektrische Servolenkvorrichtung nach Anspruch 9, wobei die Vierrad-Schätzlenkwinkel $\theta$est1, $\theta$est2 und $\theta$est3 jeweils mit Xt, Yt und Zt (Xt + Yt + Zt = 1,0) gewichtet werden.

**Revendications**

1. Appareil de direction à assistance électrique qui comprend un capteur de couple pour détecter un couple de direction qui est entré dans un mécanisme de direction d'un véhicule, une section de calcul de valeur d'instruction de courant pour calculer une valeur d'instruction de courant sur la base au moins dudit couple de direction, un moteur pour générer un couple de direction assistée appliqué audit mécanisme de direction, et une section de commande de moteur pour commander l'entraînement dudit moteur sur la base de ladite valeur d'instruction de courant, comprenant :

une section de calcul d'estimation d'angle de direction pour faire varier un poids de roue avant X d'un angle de direction estimé de roue avant et un poids de roue arrière Y d'un angle de direction estimé de roue arrière correspondant à un état de fonctionnement dudit véhicule et pour calculer un angle de direction estimé des quatre roues sur la base dudit poids de roue avant X et dudit poids de roue arrière Y (X + Y = 1,0),
**caractérisé en ce que**
dans un cas où ledit état de fonctionnement dudit véhicule est un fonctionnement d'accélération ou un fonctionnement de décélération, ledit appareil de direction à assistance électrique comprend en outre :

une section de calcul d'accélération et de décélération pour calculer une valeur estimée d'accélération et de décélération à partir d'une vitesse de véhicule ; et
une table sensible à l'accélération et à la décélération pour calculer ledit poids de roue avant X et ledit poids de roue arrière Y sur la base de ladite valeur estimée d'accélération et de décélération.

2. Appareil de direction à assistance électrique selon la revendication 1, dans lequel ladite section de calcul d'accélération et de décélération comprend une section différentielle pour différencier ladite vitesse de véhicule, ou une unité de mémoire pour stocker une valeur précédente de ladite vitesse de véhicule et une section de soustraction pour soustraire ladite valeur précédente d'une valeur actuelle.

3. Appareil de direction à assistance électrique selon la revendication 1 ou 2, dans lequel ladite table sensible à l'accélération et à la décélération établit ledit poids de roue avant X équivalent audit poids de roue arrière Y proche d'une valeur nulle de ladite valeur estimée d'accélération et de décélération, et rend ledit poids de roue avant X plus grand dans un fonctionnement d'accélération et un fonctionnement de décélération.

4. Appareil de direction à assistance électrique selon la revendication 1, dans lequel dans un cas où ledit état de fonctionnement dudit véhicule est un fonctionnement sur route irrégulière, ledit appareil de direction à assistance électrique comprend en outre :

une section de calcul de valeur estimée de surface de route pour calculer une valeur estimée de surface de route à partir des vitesses des quatre roues dudit véhicule ; et
une table sensible à la valeur estimée de surface de route pour calculer ledit poids de roue avant X et ledit poids de roue arrière Y sur la base de ladite valeur estimée de surface de route.

5. Appareil de direction à assistance électrique selon la revendication 4, dans lequel ladite section de calcul de valeur estimée de surface de route calcule une variation d'une vitesse de véhicule dans chacune des roues à partir desdites vitesses des quatre roues, et calcule ladite valeur estimée de surface de route en jugeant ledit fonctionnement sur route irrégulière à partir d'une accélération maximale ou d'une décélération maximale.

6. Appareil de direction à assistance électrique selon la revendication 4 ou 5, dans lequel ladite table sensible à la valeur estimée de surface de route établit ledit poids de roue avant X équivalent audit poids de roue arrière Y proche d'une valeur nulle de ladite valeur estimée de surface de route, et rend ledit poids de roue arrière Y plus important lorsque ladite valeur estimée de surface de route est une valeur prédéterminée ou supérieure.

7. Appareil de direction à assistance électrique selon la revendication 1, dans lequel dans un cas où ledit état de fonctionnement dudit véhicule est une conduite de direction en slalom, ledit appareil de direction à assistance électrique comprend en outre :
une table sensible à la vélocité angulaire de direction pour calculer ledit poids de roue avant X et ledit poids de roue arrière Y à partir d'une valeur estimée de vélocité angulaire de moteur.

8. Appareil de direction à assistance électrique selon la revendication 7, dans lequel ladite table sensible à la vélocité angulaire de direction établit ledit poids de roue avant X équivalent audit poids de roue arrière Y dans une zone où ladite valeur estimée de vélocité angulaire de moteur est petite, et rend ledit poids de roue avant X plus important lorsque ladite valeur estimée de vélocité angulaire de moteur est une valeur prédéterminée ou supérieure.

9. Appareil de direction à assistance électrique selon la revendication 1, dans lequel dans un cas où ledit état de fonctionnement dudit véhicule est un fonctionnement d'accélération, un fonctionnement de décélération, un fonctionnement sur route irrégulière, une conduite de direction en slalom, une valeur moyenne d'un angle de direction estimé des quatre roues θest1 qui est calculé lors dudit fonctionnement d'accélération et dudit fonctionnement de décélération, d'un angle de direction estimé des quatre roues θest2 qui est calculé lors dudit fonctionnement sur route irrégulière, et d'un angle de direction estimé des quatre roues θest3 qui est calculé lors de ladite conduite de direction en slalom, est établi en tant que dit angle de direction estimé des quatre roues.

**10.** Appareil de direction à assistance électrique selon la revendication 9, dans lequel lesdits angles de direction estimés des quatre roues θest1, θest2 et θest3 sont pondérés avec Xt, Yt et Zt (Xt + Yt + Zt = 1,0), respectivement.

## FIG.1

**PRIOR ART**

# FIG.2

STEERING TORQUE Th ⟶

VEHICLE SPEED Vel ⟶

| 31 CURRENT COMMAND VALUE CALCULATING SECTION | Iref1 → | 33 CURRENT LIMITING SECTION | Iref2 → | 34 + − | 35 CURRENT CONTROL SECTION | Vref → | 36 PWM— CONTROL SECTION | 37 INVERTER | 38 | 20 M |

Iref3

Im

PRIOR ART

EP 3 318 468 B1

FIG.3

STEERING TORQUE Th ──→ **31** CURRENT COMMAND VALUE CALCULATING SECTION

VEHICLE SPEED Vel ──●──→

Iref1 → **32A** (+) → Iref4 → **33** CURRENT LIMITING SECTION → Iref2 → **34** (+)(−) → Iref3 → **35** CURRENT CONTROL SECTION → Vref → **36** PWM−CONTROL SECTION → **37** INVERTER → **38** ──→ (M) **20**

STEERING ANGLE θ ──→ **32** HANDLE-RETURNING CONTROL SECTION

STEERING ANGLE SPEED ω ──→

HR

Im

PRIOR ART

EP 3 318 468 B1

**FIG.4**

**FIG.5**

VEHICLE SPEED Vel → [STEERING ANGLE ESTIMATING CALCULATING SECTION] 110

FOUR-WHEEL SPEEDS Vw →

MOTOR ANGULAR $\omega$m VELOCITY ESTIMATED VALUE →

FRONT-WHEEL ESTIMATED STEERING ANGLE $\theta$f

REAR-WHEEL ESTIMATED STEERING ANGLE $\theta$r

→ FOUR-WHEEL ESTIMATED STEERING ANGLE $\theta$est

[CORRECTION GAIN CALCULATING SECTION] 120 → CORRECTION GAIN CG

FIG.6A

FIG.6B

FRONT-WHEEL ESTIMATED
STEERING ANGLE $\theta f$

$$\frac{\omega fl - \omega fr}{\omega fl + \omega fr}$$

FIG.6C

REAR-WHEEL ESTIMATED
STEERING ANGLE $\theta r$

$$\frac{\omega rl - \omega rr}{\omega rl + \omega rr}$$

**FIG.7**

**FIG.8**

**FIG.9**

**FIG.10A**

IN GRIP RUNNING : $\theta$ f $\fallingdotseq$ $\theta$ r

**FIG.10B**

IN SLIP RUNNING : $\theta$ f $\neq$ $\theta$ r
(UNDERSTEER CHARACTERISTICS)

**FIG.11**

**FIG.12**

**FIG.13A**

IN GRIP RUNNING :Wf ≒ Wr

**FIG.13B**

IN DRIVING-WHEEL SLIP RUNNING :Wf ≠ Wr

**FIG.14**

**FIG.15**

**FIG.16**

**FIG.17**

**FIG.18**

# FIG.19

```
                        ┌─────────────────┐
                        │      START      │
                        └─────────────────┘
                                 │
                                 ▼                    S1
                 ┌───────────────────────────────┐
                 │      INPUT VEHICLE SPEED       │
                 └───────────────────────────────┘
                                 │
                                 ▼                    S2
                 ┌───────────────────────────────┐
                 │     INPUT FOUR-WHEEL SPEEDS    │
                 └───────────────────────────────┘
                                 │
                                 ▼                    S3
                 ┌───────────────────────────────┐
                 │   INPUT MOTOR ANGULAR VELOCITY │
                 │        ESTIMATED VALUE         │
                 └───────────────────────────────┘
                                 │
                                 ▼                    S10
                 ┌───────────────────────────────┐
                 │     CALCULATE FOUR-WHEEL       │
                 │   ESTIMATED STEERING ANGLE     │
                 │    (FRONT-WHEEL/REAR-WHEEL     │
                 │    ESTIMATED STEERING ANGLE)   │
                 └───────────────────────────────┘
                                 │
                                 ▼                    S30
                 ┌───────────────────────────────┐
                 │    CALCULATE CORRECTION GAIN   │
                 └───────────────────────────────┘
                                 │
                                 ▼                    S50
                 ┌───────────────────────────────┐
                 │   CALCULATE HANDLE-RETURNING   │
                 │        CONTROL VALUE           │
                 └───────────────────────────────┘
                                 │
                                 ▼                    S70
                 ┌───────────────────────────────┐
                 │          CORRECTION            │
                 └───────────────────────────────┘
                                 │
                                 ▼
                        ┌─────────────────┐
                        │       END       │
                        └─────────────────┘
```

**FIG.20**

START

↓ S11

CALCULATE FRONT-WHEEL
ESTIMATED STEERING ANGLE

↓ S12

CALCULATE REAR-WHEEL
ESTIMATED STEERING ANGLE

↓ S13

INPUT VEHICLE SPEED

↓ S14

CALCULATE FRONT-WHEEL WEIGHT X

↓ S15

CALCULATE REAR-WHEEL WEIGHT Y

↓ S16

MULTIPLYING （X）

↓ S17

MULTIPLYING （Y）

↓ S18

ADDING

↓

END

**FIG.21**

```
                    ┌─────────────┐
                    │    START    │
                    └──────┬──────┘
                           │
                           ▼                        S31
        ┌──────────────────────────────────────┐
        │   INPUT FRONT-WHEEL ESTIMATED         │
        │           STEERING ANGLE              │
        └──────────────────┬───────────────────┘
                           │
                           ▼                        S32
        ┌──────────────────────────────────────┐
        │        INPUT REAR-WHEEL               │
        │     ESTIMATED STEERING ANGLE          │
        └──────────────────┬───────────────────┘
                           │
                           ▼                        S33
        ┌──────────────────────────────────────┐
        │  CALCULATE GRADUAL CHANGING AMOUNT    │
        │         FOR VEHICLE SLIP GAIN         │
        └──────────────────┬───────────────────┘
                           │
                           ▼                        S34
        ┌──────────────────────────────────────┐
        │        LIMITING-ACCUMULATING          │
        └──────────────────┬───────────────────┘
                           │
                           ▼                        S40
        ┌──────────────────────────────────────┐
        │        INPUT FOUR-WHEEL SPEEDS        │
        └──────────────────┬───────────────────┘
                           │
                           ▼                        S41
        ┌──────────────────────────────────────┐
        │      CALCULATE FRONT-WHEEL SPEED      │
        └──────────────────┬───────────────────┘
                           │
                           ▼                        S42
        ┌──────────────────────────────────────┐
        │      CALCULATE REAR-WHEEL SPEED       │
        └──────────────────┬───────────────────┘
                           │
                           ▼                        S43
        ┌──────────────────────────────────────┐
        │  CALCULATE GRADUAL CHANGING AMOUNT    │
        │      FOR DRIVING-WHEEL SLIP GAIN      │
        └──────────────────┬───────────────────┘
                           │
                           ▼                        S44
        ┌──────────────────────────────────────┐
        │        LIMITING-ACCUMULATING          │
        └──────────────────┬───────────────────┘
                           │
                           ▼                        S45
        ┌──────────────────────────────────────┐
        │             MULTIPLYING               │
        └──────────────────┬───────────────────┘
                           │
                           ▼
                    ┌─────────────┐
                    │     END     │
                    └─────────────┘
```

**FIG.22**

```
                    ┌─────────────┐
                    │    START    │
                    └──────┬──────┘
                           │                    S51
                    ┌──────▼──────────────┐
                    │   INPUT FOUR-WHEEL   │
                    │ ESTIMATED STEERING ANGLE │
                    └──────┬──────────────┘
                           │                    S52
                    ┌──────▼──────────────┐
                    │ STEERING ANGLE SENSITIVE-TABLE │
                    └──────┬──────────────┘
                           │                    S53
                    ┌──────▼──────────────┐
                    │  INPUT VEHICLE SPEED │
                    └──────┬──────────────┘
                           │                    S54
                    ┌──────▼──────────────┐
                    │ VEHICLE SPEED SENSITIVE-TABLE │
                    └──────┬──────────────┘
                           │                    S55
                    ┌──────▼──────────────┐
                    │     MULTIPLYING     │
                    └──────┬──────────────┘
                           │                    S56
                    ┌──────▼──────────────┐
                    │ INPUT MOTOR ANGULAR VELOCITY │
                    │    ESTIMATED VALUE  │
                    └──────┬──────────────┘
                           │                    S57
                    ┌──────▼──────────────┐
                    │ STEERING ANGULAR VELOCITY │
                    │    SENSITIVE-TABLE  │
                    └──────┬──────────────┘
                           │                    S58
                    ┌──────▼──────────────┐
                    │     MULTIPLYING     │
                    └──────┬──────────────┘
                           │                    S60
                    ┌──────▼──────────────┐
                    │  INPUT CORRECTION GAIN │
                    └──────┬──────────────┘
                           │                    S61
                    ┌──────▼──────────────┐
                    │     MULTIPLYING     │
                    └──────┬──────────────┘
                           │                    S62
                    ┌──────▼──────────────┐
                    │ LIMITING-PROCESSING │
                    └──────┬──────────────┘
                           │
                    ┌──────▼──────┐
                    │     END     │
                    └─────────────┘
```

**FIG.23**

| | VIEWPOINT | RESPONSIBILITY | GRAVEL ROAD | SLIP | DEBRIS ROAD | ACCELERATION AND DECELERATION | BELGIAN BLOCK ROAD |
|---|---|---|---|---|---|---|---|
| RUNNING STATE | CONTENT | TURNING ROAD HIGH SPEED SLALOM 70 [km/h] | GRAVEL ROAD FREE RUNNING 30 [km/h] | GRAVEL ROAD SLIP RUNNING 30 [km/h] | DEBRIS ROAD FREE RUNNING 10, 20 [km/h] | TEST TRACK ACCELERATION AND DECELERATION RUNNING 0→100→0 [km/h] | BELGIAN BLOCK ROAD STRAIGHT RUNNING 20 [km/h] |
| STEERING ANGLE ESTIMATING METHOD | FRONT-WHEELS | ◎ | ◎ | × | NO SIGNIFICANT DIFFERENCE | △ | △ |
| | REAR-WHEELS | × | × | × | NO SIGNIFICANT DIFFERENCE | ◎ | × |
| | AVERAGE OF FRONT AND REAR WHEELS | ○ | ○ | △ | NO SIGNIFICANT DIFFERENCE | ○ | ○ |

**FIG.24**

**FIG.25**

**FIG.26**

**FIG.27**

**FIG.28**

**FIG.29**

**FIG.30**

FRONT-WHEEL ESTIMATED
STEERING ANGLE $\theta f$

MOTOR ANGULAR
VELOCITY
SENSITIVE-TABLE    230

113

$\theta f \cdot X$

X

+    114

FOUR-WHEEL ESTIMATED
STEERING ANGLE $\theta$ est3

(X,Y)    FRONT-WHEEL WEIGHT X

MOTOR ANGULAR VELOCITY
ESTIMATED VALUE $\omega m$

$\omega m_0$

REAR-WHEEL WEIGHT Y    $\omega m$    Y

+

$\theta r \cdot Y$

112

REAR-WHEEL ESTIMATED
STEERING ANGLE $\theta r$

**FIG.31**

OUTPUT ( X, Y )

FRONT-WHEEL WEIGHT X

REAR-WHEEL WEIGHT Y

0    $\omega m_0$    MOTOR ANGULAR VELOCITY
ESTIMATED VALUE $\omega m$

**FIG.32**

ACCELERATION AND
DECELERATION RUNNING
FOUR-WHEEL STEERING ANGLE
ESTIMATED VALUE $\theta$ est1

240    242

1／3

FOUR-WHEEL ESTIMATED
STEERING ANGLE $\theta$ est4

$+ \theta b$

ROUGH ROAD RUNNING
FOUR-WHEEL STEERING ANGLE
ESTIMATED VALUE $\theta$ est2

241

$+ \theta a$

SLALOM STEERING RUNNING
FOUR-WHEEL STEERING ANGLE
ESTIMATED VALUE $\theta$ est3

**FIG.33**

ACCELERATION AND
DECELERATION RUNNING
FOUR-WHEEL STEERING ANGLE
ESTIMATED VALUE $\quad \theta$ est1

243
Xt
TIMES

246

248
1／(Xt＋Yt＋Zt)

FOUR-WHEEL ESTIMATED
STEERING ANGLE $\quad \theta$ est5

＋
＋ $\theta$ d

ROUGH ROAD RUNNING
FOUR-WHEEL STEERING ANGLE
ESTIMATED VALUE $\quad \theta$ est2

244
Yt
TIMES

247

＋
＋ $\theta$ c

SLALOM STEERING RUNNING
FOUR-WHEEL STEERING ANGLE
ESTIMATED VALUE $\quad \theta$ est3

245
Zt
TIMES

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3551147 B
- JP 3525541 B
- JP 4671435 B
- JP 2013147174 A
- JP 4167959 B